Europäisches Patentamt

European Patent Office

Office européen des brevets

(11) Publication number: **0 417 377 A1**

# EUROPEAN PATENT APPLICATION

(21) Application number: 89850296.8

(22) Date of filing: 12.09.89

(51) Int. Cl.⁵: **A01F 25/16**, **A23K 3/03**, **A23K 1/22**

(43) Date of publication of application:
20.03.91 Bulletin 91/12

(84) Designated Contracting States:
AT BE CH DE ES FR GB GR IT LI LU NL SE

(71) Applicant: **BIOCOMB AKTIEBOLAG**
**Industrigatan 60 Box 11034**
**S-250 11 Helsingborg(SE)**

(72) Inventor: **Mason, Victor C.**
**13 Nickolas Road**
**Henlry-on-Thames Oxon RG9 1RB(GB)**
Inventor: **Brunér, Hasse**
**P1 2018, Rackekärr**
**S-544 00 HJ0(SE)**

(74) Representative: **Hynell, Magnus**
**Hynell Patenttjänst AB Box 236**
**S-683 02 Hagfors(SE)**

(54) Method and equipment for the preservation of crop material.

(57) In a method for the preservation of crop material under alkaline conditions, the said crop material consisting of a mixture containing seeds and fragmentated straw material, which may include ear, stem and leaf tissue, the crop material is bulk-stored in a silo under airtight anaerobic conditions, and is preserved under alkaline pH conditions produced by the addition of ammonia or at least one ammonia precursor and/or by the addition of at least one stronger alkali, said chemicals or their products reacting exothermically with the crop material. The heat generated by said exothermic reaction is caused to drive moist air to the top of the silo, reducing the moist content of the crop material in the bulk of crop material. Cooler conditions are maintained at the top of the silo, causing the condensation of water there, and the condensate is collected and removed from the silo and from the crop material during the period of storage. The invention also relates to an apparatus for carrying out the method.

EP 0 417 377 A1

# METHOD AND EQUIPMENT FOR THE PRESERVATION OF CROP MATERIAL

## TECHNICAL APPLICATION

The present invention relates to a method and quipment for improving the preservation of crop material under alkaline conditions, the said crop material consisting of a mixture containing seeds and fragmented straw material, which may include ear, stem and leaf tissue.

## BACKGROUND OF THE INVENTION

Unlike the situation with grass and similar wet material, which can be successfully preserved by ensilement under acidic and anaerobic conditions, the loose, low-density nature of moist whole crop cereals and straws renders them susceptable to rapid aerobic deterioration if oxygen penetrates the silo. This process is characterised by the copious growth of fungi, yeasts and bacteria, some of which can produce toxins and present a health hazard to humans and animals alike.

To reduce these difficulties, alkaline anaerobic systems have been devised for preserving high dry matter, low sugar containing crops. In addition to the negative effects of high pH on the activity of many microbes, ammonia and its precursor urea appear to be toxic to most species of fungi and yeasts and can suppress the activity of many types of bacteria. (In the present context an ammonia precursor is defined as a chemical or product which will release ammonia spontaneously or when brought into contact with the moist crop.)

The potential advantages and alternative applications of these systems have been described or referred to in the following and other publications:

1) Deschard, G., Mason, V.C and Tetlow, R.M.. Treatment of whole-crop cereals with alkali. 4. Voluntary intake and growth in steers fed wheat ensiled with sodium hydroxide, urea or ammonia. Animal Feed Science and Technology, (1988), 19, 55-56. Elsevier Science Publishers BV, Amsterdam.

2) Tetlow, R.M., Mason V.C. and Deschard, G.. Treatment of whole-crop cereals with alkali. 2. Voluntary intake and digestibility studies in sheep fed wheat ensiled with sodium hydroxide. Animal Feed Science and Technology (1987), 18, 271-281. Elsevier Science Publishers BV, Amsterdam.

3) Mason, V.C., Merry, R.J., Braithwaite, G.D., Cook, J.E., Jones, L., and Hoadley, C.J. Preservation of whole-crop wheat using acid and alkaline additives. In: C.Thomas (Ed.) 8th Silage Conference, Hurley, UK. (1987), Abstract 52, 191-192.

4) Mason, V.C.. Storage of whole crop cereals under alkaline conditions prior to industrial processing. Workshop: Agricultural Refineries - A Bridge From Farm To Industry. EEC Symposium. Bornholm (1987).

5) Mason, V.C. and Tetlow, R.M.. Whole-crop wheat as conserved feed for beef production. PIRA, Paper and Board Division International Conference: Straw - A Valuable Raw Material. Cambrige, UK. (1987), 12pp.

A disadvantage of these systems is that considerable amounts of heat are generated through chemical reactions and to a lesser extent microbial activity. This can cause certain problems in large silos: It stimulates an upward movement of moist air to the roof of the silo, where the air is cooled by contact with the outer sheeting, causing the condensation of water. The condensate then drips back onto the crop, soaking areas of the top, side and base. Depending on conditions, accumulation of this water in a restricted area can encourage microbial activity and crop destruction. Moreover, the presence of these wet pockets makes it difficult to recover gaseous ammonia from the crop prior to opening the silo. A further problem is that the wet crop is difficult to partition by physical means at the end of the storage period.

## BRIEF DISCLOSURE OF THE INVENTION

The aim of the present invention is to solve some of these problems. In particular it is an objective of the invention to improve methods of alkaline preservation, by reducing the problems caused by heat generation and water condensation during storage. It is also an objective to lower the moisture content of the crop during the preservation period. A further objective is to provide a method for recovering gaseous ammonia from ammonia-treated silos prior to opening, to avoid air and environmental pollution and to enable the re-use of this valuable chemical as fertilizer or for crop preservation. Finally, it is an objective to preserve the crop in a manner suited to its ultimate use, for example, as feed for domestic farm animals (e.g. ruminants and non-ruminants) or as substrate for industrial processing (e.g. the making or production of ethanol, paper etc.).

These and other objectives may be achieved therein that the invention is characterised by what is stated in the appended claims.

Further aspects, advantages, objectives and characteristic features of the invention will become evident from the following description of a preferred embodiment.

## BRIEF DESCRIPTION OF DRAWINGS

The following description of the method and preferred equipment is made with reference to the accompanying schematic drawings, in which
Fig. 1 is a side-view, partially in section,
Fig. 2 shows the encircled part of Fig. 1 in larger scale, and

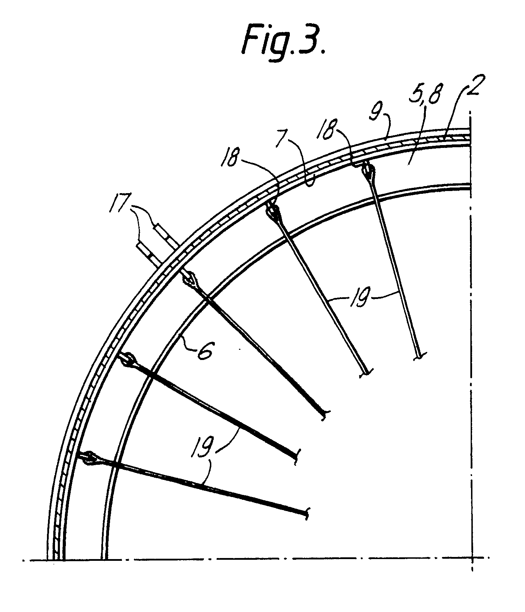

Fig. 3 is a view along the line III-III in Fig. 2.

## DESCRIPTION OF PREFERRED EMBODIMENT

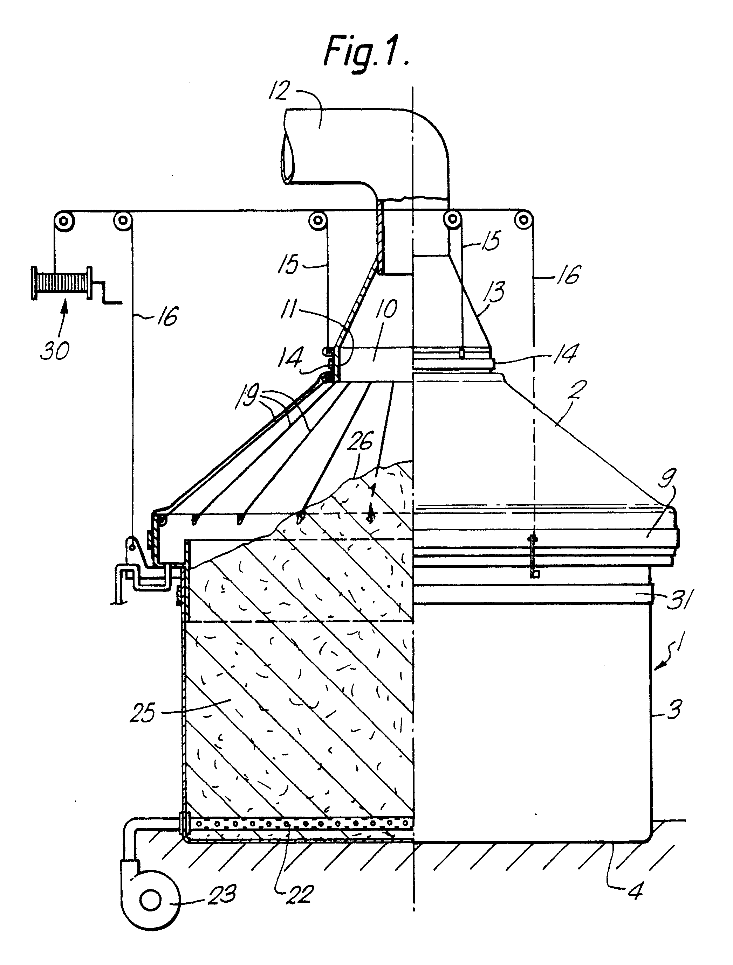

As shown in Fig. 1, the silo is designated 1. It is made of heavy plastic sheeting and is cylindrical in shape with a conical plastic roof, designated 2. The cylindrical wall of the silo is designated 3 and the base part 4.

Supporting the top of the wall is a circular steel gutter-ring 5. This consists of an inner vertical plate 6, an outer vertical plate 7, and a joining horizontal plate 8. The top of the silo wall 3 is suspended on hooks 29 welded to the outer lower side of plate 6 and is further secured by a first adjustable strap 31 which runs round the circumference of plate 6. The lower part of the conical roof 2 is similary secured to hooks on the outer side of plate 7 and further secured by a second adjustable strap 9 which runs round the circumference of plate 7.

The plastic roof 2 rests on four steel tubes (not shown) and a plurality of metal wires 19 fixed radially between brackets 18 on the inner surface of plate 7 and the outer side of a smaller central ring 11, placed higher and close to the apex of the silo (like the spokes of an offset wheel). At the apex of the roof 2 is a circular opening 10 attached to the central ring 11 with an adjustable third strap 14. A cylindrical conduit 12 is connected to said ring 11 by an upper cone 13. A closure valve may be fitted in cone 13 or in conduit 12. To keep the silo roof 2 from sagging, the lower edge of the roof 2 is pulled down with ropes just before strap 9 is tightened.

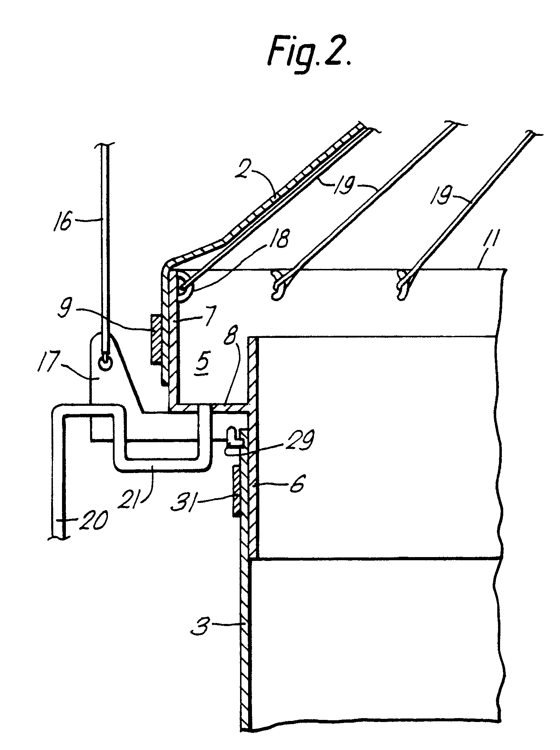

The silo roof 2 and wall 3 are suspended by wires 15 and 16, attached to the central ring 11 and gutter-ring attachments 17 which project from the underside of plate 8, respectively (see Fig. 2). Facilities are provided 30 for raising and lowering the roof 2 and wall 3 with wires 15 and 16.

The gutter-ring 5 provides a means for collecting the condensate formed on the inner side of the roof 2. To remove this condensate from the silo, a number of drainage lines 20 with air locks 21 are attached to drainage tubes welded through plate 8 of the gutter-ring 5 (see Fig. 2).

In the bottom of the silo 1, adjacent to the base 4, a system of perforated air conduits 22 is located. This can be coupled to a fan 23 to blow air through the silo just prior to opening.

The equipment described above is intended to be used in the following way for purposes of the invention. Crop, consisting of seeds and fragmented ear, leaf and stem material (c. 25 to 40% dry matter content), mixed with ammonia, an ammonia precursor and/or a stronger alkali, such as sodium hydroxide, is introduced into the silo 1 via conduit 12 and opening 10 to form a stack of material 25 for storage. The distance between the upper edge of this stack 26 and the silo roof 2 should be 0.3-1.5 m, but preferable less than 1.0 m.

Best preservation is normally achieved with ammonia or its precursors. Amongst the latter, urea is relatively cheap, but other compounds such as ammonium bicarbonate may be preferred in warm climatic conditions. These compounds are usually applied in amounts sufficient to supply 1 to 2% ammonia equivalent, expressed on the basis of crop dry matter. For particular situations, such as the storage of stem material for paper pulp production, a stronger alkali such as sodium hydroxide may be preferred and applied at 2 to 4% of the dry matter, with or without an ammonia precursor. These additives raise the pH of the crop to about 8.0 or more, depending on the chemical used, the rate of chemical application and characteristics of the crop.

As soon as possible after filling is completed the height of the gutter-ring 5 is adjusted and the silo is sealed to make it air-tight. In particular, the air-ducts in the base 22 are closed, the first and second straps securing the silo wall 3 and roof 2 to the gutter-ring 5 (straps 31 and 9, respectively) are tightened and the opening in the roof 10 is sealed, either with a closure valve or with a small sheet of plastic secured with the third strap 14. The cylindrical conduit 12 can be removed at this stage.

Soon after the crop and chemicals are mixed, they start to react. Ammonia, ammonium bicarbonate and sodium hydroxide can react immediately, but urea must be degraded to ammonia and ammonium bicarbonate by the action of urease before it bevomes effective. These reactions raise the pH, and this, particularly in combination with the release of ammonia, will prove lethal to most fungi and yeasts and many species of bacteria. Furthermore, heat is generated as the chemicals react with constituents of the crop, especially cell wall constituents and soluble sugars. In the case of ammonia-based additives the temperature of the crop 25 cans rise to 60-70°C within the first fortnight of anaerobic storage, and then fall slowly over successive weeks. With stronger alkalis, however, the temperature increase is usually greater and more rapid and can cause spontaneous combustion if anaerobic conditions are not maintained. Heat can also be produced by the metabolic activity of thermophilic and other microbes.

The generation of heat stimulates the upward movement of currents of moisture-laiden air to the top of the silo. Here the saturated air is cooled by contact with the outer sheeting of plastic (or other enclosing material), causing condensation of water. When the preservative is urea or ammonia, this water contains both ammonia and ammonium hydroxide in solution. The condensed liquid runs down the inner side of the silo roof 2 and is collected by the gutter-ring 5. It then flows out of the silo 1 via the drainage lines 20 and air locks 21 and is finally collected in plastic tubes containing cold water or a dilute solution of acid, e.g. sulphuric acid. This process will continue for as long as the temperature in the stored crop is higher than the ambient temperature of the air above the silo roof.

During the storage period the crop will compact. Therefore the roof 2 is lowered accordingly by means of wires 15, 16 and the facilities 30.

A few days prior to emptying the silo, the air conduits 22 of silages treated with ammonia-based additives are opened and connected to the external fan 23. The latter blows air through the crop, to displace gaseous ammonia which is collected in acid in the drainage tubes. The solution of ammonium sulphate, which is formed by reaction with the sulphuric acid, can later be used as fertilizer. Once the bulk of the free ammonia has been removed the silo can be emptied with little risk to the environment.

It must be realized that the described method and equipment can be varied within the spirit and scope of the invention. Some of the alternative alkaline compounds which might be contemplated in the context of the invention have been mentioned. Regarding equipment, the silo can be made of materials other than plastic sheeting, for example concrete, metal, wood as well as combinations of the mentioned materials. Moreover, the silo need not be cylindrical in shape, especially if it is constructed of materials other than plastic sheeting.

The roof section can be designed in several ways, though normally it will slope towards one or more channels for the collection of condensate. One option is for the roof to slope lika a funnel towards a central condensate collector. If, however, the silo is rectangular the roof might slope from the central ridge towards collectors located along the outer edges of the silo, or from two or more raised sides towards a gutter or other collecting channel located in the middle of the roof section. It is also possible to design the roof with a zig-zagged cross section, in which case a condensate collector could be located at the base of each valley of said zigzag pattern. In another option, condensate collectors, in the form of sloping gutters, might be located beneath the roof of the silo. In this case the collectors might overlap each other such that water vapour can reach and condense against the roof or other cooling surface, allowing the condensate to drip into the gutters and drain away. With this system the cooling surface need not necessarily have a slop. Clearly, other condensation and collection systems are possible, and the invention is therefore not limited to the mentioned embodiments.

## Claims

1. Method for the preservation of crop material under alkaline conditions, the said crop material consisting of a mixture containing seeds and fragmented straw material, which may include ear, stem and leaf tissue, **characterised** in
- that the crop material is bulk-stored in a silo under air-tight anaerobic conditions,
- that the crop material is preserved under alkaline pH conditions produced by the addition of ammonia or at least one ammonia precursor and/or by the addition of at least one stronger alkali, said chemicals or their products reacting exothermically with the crop material,
- that the heat generated by said exothermic reaction is caused to drive moist air to the top of the silo, reducing the moist content of the crop material in the bulk of crop material,
- that cooler conditions are maintained at the top of the silo, causing the condensation of water there, and
- that the condensate is collected and removed from the silo and from the crop material during the period of storage.

2. Method according to claim 1, **characterised** in that the crop material is supplied to the air-tight silo to form a bulk of crop material substantially filling the silo.

3. Method according to claim 1, **characterised** in that ammonia and/or an ammonia precursor is added to the crop material, the applied ammonia or ammonia equivalent amounting to between 1 and 5 weight-%, preferably 2 to 4 weight-% of the dry matter of the crop material.

4. Method according to claim 3, **characterized** in that the ammonia precursor consists of urea and/or ammonium bicarbonate.

5. Method according to claim 3, **characterized** in that besides ammonia or at least one ammonia precursor there is also added at least one earth metal alkali, preferably sodium hydroxide, NaOH, to the bulk of crop material, in an amount sufficient for increasing the pH-value in the bulk of crop material at least one pH-unit in excess of the pH-value obtained through the addition of ammonia or ammonia precursor to the crop material.

6. Method according to any of claims 3-5, **characterized** in that said ammonia or ammonia precursor and some said other optionally added alkaline compound is supplied to the bulk of crop material in an amount sufficient for maintaining a pH-value of at least pH8 and preferably at least pH9 in the bulk of crop material in said air-tight silo during the period of conservation.

7. Method according to claim 1, **characterized** in that after the period of preservation, gaseous ammonia existing in the silo is withdrawn from the silo, said withdrawn gaseous ammonia being collected in a liquid.

8. Method according to claim 7, **characterized** in that said withdrawn gaseous ammonia is collected in an acidic liquid, preferably sulphoric acid, in order to react with said liquid to form ammonium sulphate.

9. Method according to any of claims 1-8 **characterized** in that said ammonia precursor and said optional other alkaline compound is supplied to said crop material prior to filling the silo with crop material, that the mixture of crop material and said additive or additives is filled into the silo through a conduit at the top of the silo at the same time as air existing in the silo is expelled, that during the period of conservation, the moist content of the crop material is reduced through the generation of heat in the bulk of crop material, evaporation of water through said heat generation, condensation of water at the top of the silo, collecting the condensate and withdrawing it from the silo, and that after the period of an aerobic, alkaline preservation in the silo, gaseous ammonia is expelled from the bulk of crop material and from the silo by blowing air into and through the bulk of crop material from underneath and withdrawing the mixture of air and ammonia through a conduit above the bulk of crop material, preferably through the same conduit as was used for filling the crop material into the silo.

10. Method according to claim 9, **characterized** in that the silo is filled with crop material to a certain level beneath the roof of the silo, and that a distance between the ceiling and the top of the bulk of crop material is maintained substantially constant during the period of preservation by gradually lowering the roof of the silo compensating for a compaction of the bulk of crop material due to said alkaline compound or compounds reacting with the crop material and said moist removal from the bulk of crop material during the period of preservation.

11. Method according to claim 10, **characterized** in that a distance between the ceiling of the silo and the top of the bulk of crop material is maintained between 0.3 and 1.5 m, preferably at less than 1.0 m, during the period of preservation.

12. Method according to any of claims 1-9, **characterized** in that the condensate, which is withdrawn from the silo, consists of an aqueous solution of ammonium hydroxide.

13. Equipment for carrying out the method according to any of claims 1-12, **characterized** by a silo having walls (1) and a roof (2), said roof defining a ceiling of the interior of the silo, means (12, 13) for feeding the crop material and any additive admixted to said crop material into the silo to fill the silo with a bulk (25) of crop material up to a distance from said ceiling, means for the condensation of moist which is vaporized in said bulk of crop material through heat generation in said bulk, means (5) for collecting the condensate, and drainage means (20) for withdrawing it from the silo.

14. Apparatus according to claim 13, **characterized** in that the ceiling slopes towards said means for collecting the condensate.

15. Apparatus according to claim 14, **characterized** in that the condensate collecting means (5) encircle the ceiling, which slope outwards.

16. Apparatus according to claim 14, **characterized** in that the condensate collecting means is provided at the center of the roof which slopes like a funnel towards the center.

17. Apparatus according to claim 16, **characterized** by means (30, 15, 16) for lowering the roof and hence lowering said ceiling essentially in pace with the change of height of the bulk of crop material.

# Fig.1.

# Fig.2.

Fig.3.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | EP-A-0 215 578 (BROTHERTON CHEMICAL LTD) <br> * Claims 1,3,4,6-8; page 1, line 1 - page 2, line 2; page 4, line 6 - page 5, line 5; page 5, lines 32-34 * | 1,3,4 | A 01 F 25/16 <br> A 23 K 3/03 <br> A 23 K 1/22 |
| A | DE-B-1 181 893 (HUGO WEILER) <br> * Claim 1; figures 1-3 * | 13-15 | |
| A | DE-C- 656 531 (GEBRÜDER KREISEL & CO.) <br> * Claim 1; figures 1,2 * | 13-15 | |
| A | US-A-1 994 654 (FREDERIC J. KREUTZER) <br> * Claim 1; figure 2 * | 9 | |
| D,A | PIRA, PAPER AND BOARD DIVISION INTERNATIONAL CONFERENCE: STRAW - A VALUABLE RAW MATERIAL, 1987, pages 1-12, Cambridge, GB; V.C. MASON et al.: "Whole-crop wheat as conserved feed for beef production" <br> * The whole article * | 1,3-5 | |

TECHNICAL FIELDS
SEARCHED (Int. Cl.5)

A 01 F
A 23 K

The present search report has been drawn up for all claims

| Place of search | Date of completion of the search | Examiner |
|---|---|---|
| THE HAGUE | 27-04-1990 | DEKEIREL M.J. |

EPO FORM 1503 03.82 (P0401)